# EUROPEAN PATENT SPECIFICATION

(11) **EP 2 259 552 B1**
(45) Date of publication and mention of the grant of the patent: **12.08.2015**
(21) Application number: 10003670.6
(22) Date of filing: 01.04.2010
(51) Int. Cl.: H04L 29/08, H04W 4/02, G01S 5/02, H04W 4/20, H04W 64/00

(54) **Method and system for dynamic wireless node capture for a LBS server, client and reference database**
Verfahren und System zur dynamischen drahtlosen Knotenerfassung für einen LBS-Server, einen LBS-Clienten und eine LBS-Referenzdatenbank
Procédé et système pour capture de noeud dynamique sans fil pour une base de données de serveur LBS, client et de référence

(30) Priority: 08.04.2009 US 167742 P; 19.01.2010 US 690007
(43) Date of publication of application: 08.12.2010
(73) Proprietor: Broadcom Corporation, Irvine, CA 92617 (US)
(72) Inventor: Kosolobov, Andrei, San Jose, CA 95136 (US); Lundgren, David Albert, Mill Valley, CA 94941 (US)
(74) Representative: Jehle, Volker Armin

(56) References cited:
- WO-A2-2006/110181
- US-A- 6 140 964
- US-A1- 2004 259 575
- US-A1- 2005 208 952
- US-A1- 2006 268 795
- BAHL P ET AL: "A software system for locating mobile users: design, evaluation and lessons" INTERNET CITATION 1 April 2000 (2000-04-01), XP002967193 Retrieved from the Internet: URL:http://citeseer.nj.nec.com/296401.html [retrieved on 2000-04-01]

## Description

### CROSS-REFERENCE TO RELATED APPLICATIONS/INCORPORATION BY

### REFERENCE

This patent application makes reference to, claims priority to and claims benefit from United States Provisional Application Serial No. 61/167,742 filed on April 08, 2009.

### FIELD OF THE INVENTION

Certain embodiments of the invention relate to communication systems. More specifically, certain embodiments of the invention relate to a method and system for dynamic wireless node capture for a LBS server, client, and reference database.

US 2006/268795 and US 2004/259575 disclose location determination methods.

### BACKGROUND OF THE INVENTION

Mobile positioning service, also called location-based service (LBS), is a value-added service provided by mobile communication networks. Knowing a user's location enables various LBS applications such as, for example, enhanced 911 (E-911), location-based 411, location-based messaging and/or friend finding. Developing location approaches to determine a user's position fix at associated communication device such as a mobile phone has become the driving forces behind the LBS market. A position fix of a mobile device is determined using various approaches, for example, satellite-based systems, which comprises Global Navigation Satellite Systems (GNSS) such as the Global Positioning System (GPS), the Global Orbiting Navigation Satellite System (GLONASS), and the satellite navigation system GALILEO. A GNSS utilizes an earth-orbiting constellation of a plurality of GNSS satellites each broadcasting GNSS signals which indicates its precise location and ranging information.

Further limitations and disadvantages of conventional and traditional approaches will become apparent to one of skill in the art, through comparison of such systems with some aspects of the present invention as set forth in the remainder of the present application with reference to the drawings.

### BRIEF SUMMARY OF THE INVENTION

A method, as disclosed in claim 1, and/or system, as disclosed in claim 8, for dynamic wireless node capture for a LBS server, client, and reference database, substantially as shown in and/or described in connection with at least one of the figures, as set forth more completely in the claims.

According to an aspect, a method for communication is provided, the method comprising:
performing by one or more processors and/or circuits in a Global Navigation Satellite Systems (GNSS) capable mobile device:
   sending a device radio frequency (RF) environment report to a location server;
   receiving a capture profile from said location server; and
   generating a new RF environment report according to said received capture profile.

Advantageously, said device RF environment report comprises state of encountered one or more radios, state of power and/or memory resource, and/or positioning variables of said GNSS capable mobile device.

Advantageously, said capture profile comprises information of a desired RF environment report that said location server expects from said GNSS capable mobile device.

Advantageously, said location server determines said capture profile for said GNSS capable mobile device based on said RF environment report and a reference database.

Advantageously, the method further comprises capturing RF environment data according to said received capture profile.

Advantageously, the method further comprises time and location stamping said captured RF environment data.

Advantageously, the method further comprises generating said new device RF environment report using said time and location stamped RF environment data.

Advantageously, the method further comprises sending said generated new device RF environment report to said location server.

Advantageously, said reference database is updated according to said received new device RF environment report.

Advantageously, said location server locates said GNSS capable mobile device using said updated reference database.

According to an aspect, a system for communication comprises:
one or more processors and/or circuits in a Global Navigation Satellite Systems (GNSS) capable mobile device, wherein said one or more processors and/or circuits are operable to:
   send a device radio frequency (RF) environment report to a location server;
   receive a capture profile from said location server; and
   generate a new RF environment report according to said received capture profile.

Advantageously, said device RF environment report comprises state of encountered one or more radios, state of power and/or memory resource, and/or positioning variables of said GNSS capable mobile device.

Advantageously, said capture profile comprises information of a desired RF environment report that said location server expects from said GNSS capable mobile device.

Advantageously, said location server determines said capture profile for said GNSS capable mobile device based on said RF environment report and a reference database.

Advantageously, said one or more processors and/or circuits are operable to capture RF environment data according to said received capture profile.

Advantageously, said one or more processors and/or circuits are operable to time and location stamp said captured RF environment data.

Advantageously, said one or more processors and/or circuits are operable to generate said new device RF environment report using said time and location stamped RF environment data.

Advantageously, said one or more processors and/or circuits are operable to send said generated new device RF environment report to said location server.

Advantageously, said reference database is updated according to said received new device RF environment report.

Advantageously, said location server locates said GNSS capable mobile device using said updated reference database.

These and other advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a diagram illustrating an exemplary communication system that is operable to dynamically capture wireless nodes for a LBS server, client and reference database, in accordance with an embodiment of the invention.
FIG. 2 is a block diagram illustrating an exemplary LBS client device that is operable to dynamically generate and provide a RF environment report to a LBS server based on a RF environment capture profile, in accordance with an embodiment of the invention.
FIG. 3 is a block diagram illustrating an exemplary LBS server that is operable to dynamically capture wireless nodes using device RF environment reports from LBS client devices, in accordance with an embodiment of the invention.
FIG. 4 is a flow chart illustrating an exemplary procedure for dynamic wireless node capture for a LBS server, client and reference database, in accordance with an embodiment of the invention.

### DETAILED DESCRIPTION OF THE INVENTION

Certain embodiments of the invention may be found in a method and system for dynamic wireless node capture for a LBS server, client and reference database. In various embodiments of the invention, a GNSS capable LBS client device is operable to send a device RF environment report to a location server. Subsequently, the GNSS capable LBS client device is operable to receive a capture profile from the location server. The device RF environment report comprises various RF information encountered by the GNSS capable LBS client device. For example, the encountered RF information may comprise state information of one or more radios, state information of power and/or memory resource, and/or positioning variables of the GNSS capable LBS client device. The received capture profile comprises information of a desired RF environment report that the location server expects from the GNSS capable LBS client device. The location server may be operable to determine the capture profile for the GNSS capable LBS client device based on the RF environment report received and a reference database, which is coupled to an A-GNSS server. The GNSS capable LBS client device is operable to capture desired RF environment data according to the received capture profile. The captured desired RF environment data may be time and location stamped using LBS client software. The GNSS capable LBS client device is operable to generate a new device RF environment report using the time and location stamped RF environment data. The generated new device RF environment report may be sent to the location server. The location server may be operable to communicate with the A-GNSS server so as to update the reference database according to the received new device RF environment report. The updated reference database may be utilized by the location server to locate associated mobile devices such as the GNSS capable LBS client device when needed.

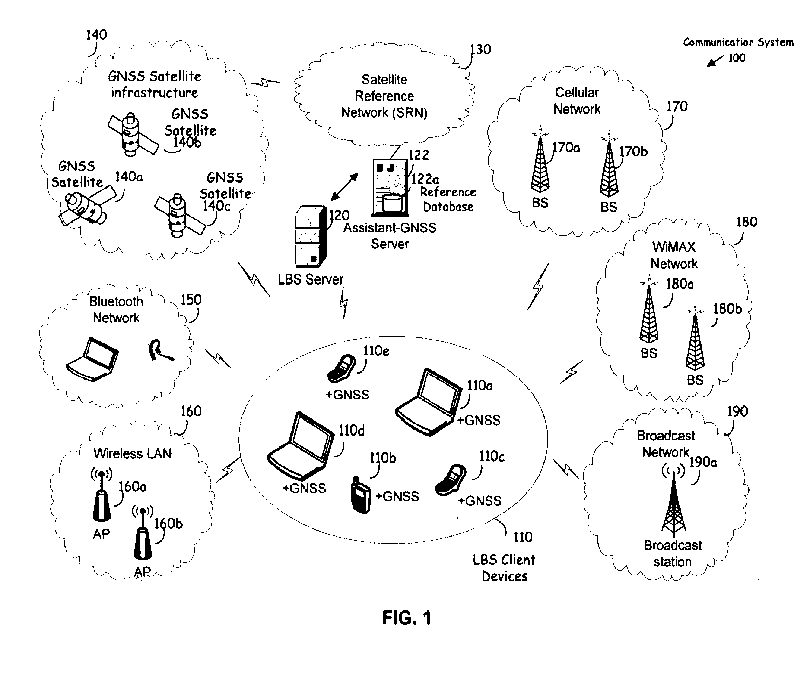

FIG. 1 is a diagram illustrating an exemplary communication system that is operable to dynamically capture wireless nodes for a LBS server, client and reference database, in accordance with an embodiment of the invention. Referring to FIG. 1, there is shown a communication system 100. The communication system 100 comprises a plurality of LBS client devices 110, of which LBS client devices 110a-110e are illustrated, a LBS server 120, an assistant GNSS server 122 comprising a reference database 122a, a satellite reference network (SRN) 130, a GNSS satellite infrastructure 140, a Bluetooth network 150, a wireless local access network (WLAN) 160, a cellular network 170, a Worldwide Interoperability for Microwave Access (WiMAX) network 180, and a broadcast network 190. The GNSS satellite infrastructure 140 comprises a plurality of GNSS satellites, of which GNSS satellites 140a-140c are illustrated. The WLAN 150 comprises a plurality of WLAN access points such as WLAN access points (APs) 160a and 160b. The cellular network 170 and the WiMAX network 180 comprise a plurality of base stations (BSs), of which base stations 180a -180b and base stations 190a-190b are illustrated. The broadcast network 190 comprises a plurality of broadcast towers such as a broadcast tower 190a.

A LBS client device such as the LBS client device 110a may comprise suitable logic, circuitry, interfaces and/or code that are operable to communicate radio frequency signals with communication networks, for example, the Bluetooth network 150. Depending on device capabilities, the LBS client device 110a may be operable to capture RF environment data for various encountered wireless nodes such as, for example, the WLAN APs 160a-160b, the broadcast station 190a, the BSs 170a-170b, and/or the BSs 180a-180b. The captured RF environment data may comprise RF environment information that the LBS client device 110a encountered and/or encounters. The captured RF environment data may comprise RF environment information that may be utilized to dynamically capture and/or locate encountered wireless nodes for the LBS server 120, associated LBS clients, and the reference database 122a, which is integrated or coupled to the assistant GNSS server 122. The captured RF environment information may comprise, for example, the state of encountered radios such as 2G or 3G cellular radio, WiMAX radio, GNSS radio, WiFi radio, FM radio, and/or Bluetooth radio, the state of power and/or memory information of the LBS client device 110a, and/or information such as velocity, heading and positioning variables of the LBS client device 110a. In instances where the LBS client device 110a may be a GNSS capable device, the LBS client device 110a may be operable to receive GNSS radio frequency (RF) signals from visible GNSS satellites such as the GNSS satellites 140a-140c. The received GNSS RF signals may be used to calculate a position fix of the LBS client device 110a. In this regard, the LBS client device 110a may be operable to stamp, in time and location, the captured RF environment data. The LBS client device 110a may be operable to generate a device RF environment report using the time and location stamped RF environment data and send to the LBS server 120. In this regard, the LBS client device 110a may be operable to receive a designated device capture profile from the LBS server 120. The designated device capture profile may comprise desired RF environment data or information that the LBS client device 110a is expected to collect and/or provide to the reference database 122a of the assistant GNSS server 122. The LBS client device 110a may be operable to capture desired RF environment data according to the designated device capture profile. The captured desired RF environment data may be time and location stamped. The LBS client device 110a may be operable to generate a new device RF environment report using the time and location stamped desired RF environment data. The LBS client device 110a may be operable to send the newly generated device RF environment report to the LBS server 120 to optimize LBS performance. For example, the generated new device RF environment report may dynamically capture wireless nodes for the LBS server 120 and associated LBS clients. The generated new device RF environment report may be used to build and/or refine the reference database 122a of the assistant GNSS server 122 over time such that the captured wireless nodes may be accurately located for use as reference nodes in locating corresponding mobile wireless devices such as the LBS client device 110a for LBS services.

The LBS server 120 may comprise suitable logic, devices and/or code that may be operable to retrieve location information for associated users. The LBS server 120 may be operable to receive a plurality of device RF environment reports from associated LBS client devices such as the LBS client device 110a. A device RF environment report from a LBS client device such as the LBS client device 110a may comprise time and location stamped RF environment information, which may indicate wireless nodes that the LBS client device encountered or detected. The LBS server 120 may be operable to communicate with the assistant-GNSS server 122 to compare the received device RF environment report with a portion of the reference database 122a near the detected wireless nodes.

The LBS server 120 may be operable to generate a device capture profile designated to the LBS client device 110a based on the reported RF environment information and the status of the reference database 122a. For example, in instances where the reported RF environment information may indicate that the LBS client device 110a has sufficient power and/or memory, and is in an area where the reference database 122a is not well populated, the LBS server 120 may instruct the LBS client device 110a in the generated capture profile to aggressively capture or map device RF environment data for the area. However, in contrast, in instances where the reported RF environment information may indicate that the LBS client device 110a is low on battery and/or memory, and may be in an area that is adequately mapped so that the reference database 122a may not require additional information at the current time, the LBS client device 110a may be instructed to capture or map device RF environment data in a reduced manner, or not to capture or map at all. Accordingly, the generated capture profile may comprise desired device RF environment information that the LBS server 120 expects the client device 110a to provide.

In an exemplary embodiment of the invention, the generated capture profile may comprise information such as, state of reference database 122a at present and/or future positions (coverage, freshness and depth), and/or sampling rate for capturing reference database data. In addition, the generated capture profile may also comprise information such as duration to continue sampling for each associated radio and when the LBS client device 110a should upload (immediate vs. next-available access) a device RF environment report. In instances where the LBS client device 110a does not have adequate resources such as battery power, the LBS client device 110a may defer upload of the RF environment report until there is adequate battery power available. The LBS server 120 may be operable to send the generated capture profile to the LBS client device 110a. In response, the LBS server 120 may be operable to receive a new device RF environment report, which is created by the LBS client device 110a based on the designated capture profile, from the LBS client device 110a. The LBS server 120 may be operable to communicate the received new RF environment report to the assistant-GNSS server 122 to build and/or refine the reference database 122a.

The assistant GNSS server 122 may comprise suitable logic, circuitry and/or code that may be operable to access the satellite reference network (SRN) 130 to collect GNSS satellite data by tracking GNSS constellations through the SRN 130. The assistant GNSS server 122 may be operable to utilize the collected GNSS satellite data to build the reference database 122a. The reference database 122a may comprise suitable logic, circuitry, and/or code that may be operable to store reference positions to be used to provide GNSS assistance data to associated users to support LBS services. In this regard, the assistant GNSS server 122 may be operable to communicate with the LBS server 120 and provide reference position information near one or more wireless nodes indicated by the LBS server 120. The assistant GNSS server 122 may be operable to further receive location information near the one or more wireless nodes from the LBS server 120 to enhance the reference database 122a. The received location information for the one or more wireless nodes may be derived by the LBS server 120 from device RF environment reports received from associated LBS client devices such as the LBS client device 110a. The assistant GNSS server 122 may be operable to communicate information in exemplary formats compatible with telecommunication networks such as GSM/UMTS, WiMAX, WiFi and/or Bluetooth. For example, the assistant GNSS server 122 may be GSM/UMTS standard compliant by supporting messaging in RRLP format, PCAP interface and/or OMA SUPLv1.0. The assistant GNSS server 122 may be configured to communicate with the LBS server 120 via either a user-plane or a control-plane to seamlessly connect with the LBS server 120.

A GNSS satellite such as the GNSS satellite 140a may comprise suitable logic, circuitry, interfaces and/or code that is operable to broadcast satellite navigational information to various GNSS receivers on earth. The GNSS receivers, which comprise GPS, GALILEO and/or GLONASS receivers, may be integrated internally to or externally coupled to GNSS capable communication devices such as the LBS client devices 110a through 110e. The broadcast satellite navigational information such as ephemeris may be utilized to calculate, for example, a position, velocity, and/or clock information of the GNSS receivers. In this regard, the calculated GNSS clock and position information of the GNSS receivers may be used to time and location stamp device RF environment information at the GNSS receivers.

The SRN 130 may comprise suitable logic, circuitry and/or code that may be enabled to collect and distribute data for GNSS satellites on a continuous basis. The SRN 130 may comprise a plurality of GNSS reference tracking stations located around the world to provide assistant-GNSS coverage all the time in both home network and visited network allowing users of GNSS enabled devices such as the LBS client devices 110a through 110d to roam with associated LBS anywhere in the world.

The GNSS satellites 140a through 140c may comprise suitable logic, circuitry and/or code that may be operable to generate and broadcast satellite navigational information in suitable radio-frequency (RF) signals to various GNSS capable devices such as, the LBS client devices 110a-110e. In this regard, RF environment information such as GNSS RF signal strength received by the LBS client devices 110a-110e may be time and location stamped to be reported to the LBS server 120.

The Bluetooth network 150 may comprise suitable logic, circuitry, interfaces and/or code that may be operable to provide data services to various Bluetooth enabled mobile devices such as, for example, the LBS client device 110a. The Bluetooth network 150 may be operable to communicate various data services such as a location-based service in Bluetooth RF signals via Bluetooth devices such as, for example, the LBS client device 110a. In this regard, RF environment information such as Bluetooth RF signal strength communicated via the LBS client device 110a may be time and location stamped to be reported to the LBS server 120.

The wireless LAN 160 may comprise suitable logic, devices, interfaces and/or code that may be operable to provide data services to various wireless LAN enabled communication devices such as the LBS client device 110b using wireless LAN technology. Exemplary wireless LAN technology may comprise, for example, IEEE Std 802.11, 802.11 a, 802.11b, 802.11d, 802.11e, 802.11 n, 802.11v, and/or 802.11 u. The wireless LAN 160 may be operable to communicate various data services such as a location-based service (LBS) in WLAN RF signals via wireless LAN APs and WLAN capable devices such as, for example, the LBS client device 110a. In this regard, RF environment information such as WLAN RF signal strength communicated via the LBS client device 110a and/or location information of associated WLAN APs such as the WLAN AP 160a may be time and location stamped to be reported to the LBS server 120.

The cellular network 170 may comprise suitable logic, devices, interfaces and/or code that may be operable to provide data services to various associated mobile devices such as the LBS client devices 110a-110e using cellular communication technologies. The cellular communication technologies may comprise, for example, Global System for Mobile communications (GSM), General Packet Radio Services (GPRS), Universal Mobile Telecommunications System (UMTS), Enhanced Data rates for GSM Evolution (EDGE), Enhanced GPRS (EGPRS), and/or 3GPP Long Term Evolution (LTE). The cellular network 170 may be operable to communicate various data services such as a location-based service in cellular RF signals via associated base stations such as the BS 170a with associated mobile devices such as, for example, the LBS client device 110a. In this regard, RF environment information such as cellular RF signal strength received by the LBS client device 110a and/or location information of associated BSs such as the BS 170a may be time and location stamped to be reported to the LBS server 120.

The WiMAX network 180 may comprise suitable logic, devices, interfaces and/or code that may be operable to provide data services to various associated mobile devices such as the LBS client devices 110a-110e by using WiMAX technology. The WiMAX network 180 may be operable to communicate various data services such as a location-based service in WiMAX RF signals via associated base stations such as the BS 180a with associated mobile devices such as, for example, the LBS client device 110a. In this regard, RF environment information such as WiMAX RF signal strength received by the LBS client device 110a and/or location information of associated BSs such as the BS 180a may be time and location stamped to be reported to the LBS server 120.

The broadcast network 190 may comprise suitable logic, circuitry and/or code that may be operable to allocate a single carrier frequency to broadcast programs for various associated mobile devices such as the LBS client devices 110a-110e. The broadcast network 190 may be operable to transmit the broadcast programs in corresponding RF signals using various broadcast technologies such as, for example, FM, DAB, DVB-H, DVB-SH and/or DVB-T. In this regard, RF environment information such as broadcast RF signal strength received by the LBS client server 110a and/or location information of the broadcast station 190a may be time and location stamped to be reported to the LBS server 120.

In an exemplary operation, a LBS client device such as the LBS client device 110a may be operable to utilize LBS client software to capture RF environment data that it encountered. The captured RF environment data may comprise RF environment information, for example, RF signal strength received from the Bluetooth network 150 and/or the WiMAX network 180, which may be utilized to dynamically capture and/or detect encountered wireless nodes for the LBS server 120, associated LBS clients, and the reference database 122a of the assistant GNSS server 122. The LBS client device 110a may be operable to stamp, in time and location, the captured RF environment data to generate a device RF environment report. The generated device RF environment report may indicate wireless nodes that the LBS client device encountered or detected. The generated device RF environment report may be communicated to the LBS server 120.

The LBS server 120 may be operable to communicate with the assistant GNSS server 122 for a portion of the reference database 122a near the detected wireless nodes indicated in the received device RF environment report. The LBS client device 110a may be operable compare the received device RF environment report with the portion of the reference database 122a near the detected wireless nodes. The LBS server 120 may be operable to identify desired RF environment information for the assistant GNSS server 122 to build and/or refine the reference database 122a. The LBS server 120 may be operable to generate a capture profile designated to the LBS client device 110a. The generated capture profile may comprise instructions to the LBS client device 110a to capture and/or provide the identified desired RF environment information with response to the encountered wireless nodes for the reference database 122a. The LBS server 120 may be operable to send the generated capture profile to the LBS client device 110a. The LBS client device 110a may be operable to capture and/or collect RF environment data according to the received capture profile. The captured RF environment data may be time and location stamped to generate a new device RF environment report. The LBS client device 110a may be operable to send the generated new device RF environment report to the LBS server 120. The LBS server 120 may be operable to communicate the corresponding location information of the encountered wireless nodes to the assistant GNSS server 122 to build and/or enhance the reference database 122a, thereby optimizing LBS performance.

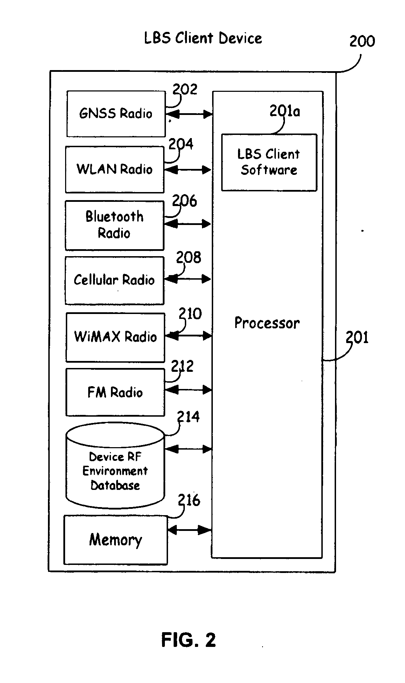

FIG. 2 is a block diagram illustrating an exemplary LBS client device that is operable to dynamically generate and provide a RF environment report to a LBS server based on a RF environment capture profile, in accordance with an embodiment of the invention. Referring to FIG. 2, there is shown a LBS client device 200. The LBS client device 200 may comprise a processor 201, a GNSS radio 202, a WLAN radio 204, a Bluetooth radio 206, a cellular radio 208, a WiMAX radio 210, a FM radio 212, a device RF environment database 214 and a memory 216. The processor 201 comprises LBS client software 201 a.

The processor 201 may comprise suitable logic, circuitry, interfaces and/or code that may be operable to manage and/or control operations of associated component units such as, for example, the GNSS radio 202, the WLAN radio 204, the Bluetooth radio 206, the cellular radio 208, the WiMAX radio 210, the FM radio 212, the device RF environment database 214 and/or the memory 216, depending on corresponding usages. For example, the processor 201 may be operable to activate or deactivate one or more associated radios such as the GNSS radio 204 and/or the cellular radio 208 as a needed basis to save power. The processor 201 may be operable to run the LBS client software 201a to capture RF environment data through its experiences with the activated radios such as the WLAN radio 204. The LBS client software 210a may be application software installed on the LBS client device 200. The LBS client software 210a may be used to detect and stamp, in time and location, characteristics of RF nodes that the LBS client device encounters during communication. The captured RF environment data may comprise RF environment information associated with the activated radios. For example, in instances where the GNSS radio 202, the WLAN radio 204 and the cellular radio 208 may be activated, the processor 201 may be operable to capture RF environment information associated with corresponding communications over the GNSS radio 202, the WLAN radio 204 and the cellular radio 208, respectively. The captured RF environment information may comprise, for example, the state of encountered radios such as GNSS radio, WLAN radio and 2G or 3G cellular radio, the state of power and/or memory information of the LBS client device 200, information such as velocity, heading and positioning variables of the LBS client device 200, and/or location information of associated wireless nodes such as, for example, the WLAN AP 160a and/or the BS 170a. The location information of the associated wireless nodes may comprise specific physical location information, for example, location related identification codes, location parameters, and/or location of the associated wireless nodes. The processor 201 may be operable to dynamically capture wireless nodes such as the BS 170a from the captured RF environment information. The processor 201 may be operable to utilize associated GNSS position to stamp, in time and location, the captured RF environment information to store into the device RF environment database 214. The processor 201 may be operable to generate a device RF environment report using data in the device RF environment database 214 when need. The processor 201 may be operable to send the generated device RF environment report to the LBS server 120. The processor 201 may be operable to receive a designated device capture profile from the LBS server 120. The designated device capture profile may comprise instruction for desired RF environment data or information from the LBS server 120. The processor 201 may be operable to run the LBS client software 201 a to capture desired RF environment data according to the designated device capture profile. The processor 201 may be operable to stamp, in time and location, the captured desired RF environment information to store into the device RF environment database 214. The processor 201 may be operable to generate a new device RF environment report using the captured desired RF environment information and report to the LBS server 120 to optimize LBS performance. For example, the newly generated device RF environment report may provide the LBS server 120 with information for dynamically capturing wireless nodes, which may be used as reference nodes in locating the LBS client device 200 for LBS services.

The GNSS radio 202 may comprise suitable logic circuitry, interfaces and/or code that may be operable to detect and track GNSS radio frequency signals that are received from visible GNSS satellites such as the GNSS satellites 140a-140c. In this regard, the detected or tracked GNSS RF signal strength may be captured via the LBS client software as RF environment information for the device RF environment database 214.

The WLAN radio 204 may comprise suitable logic circuitry, interfaces and/or code that may be operable to transmit and receive WLAN radio frequency (RF) signals. The WLAN radio frequency signals may be communicated in a format compatible with various WLAN standards such as, for example, IEEE Std 802.11, 802.11 a, 802.11 b, 802.11d, 802.11e, 802.11n, 802.11v, and/or 802.11 u. The WLAN radio 204 may be operable to receive continuous, aperiodic, or periodic WLAN radio frequency signals from, for example, the WLAN AP 160a in the WLAN 160. In this regard, the status of the received WLAN RF signals such as the received WLAN RF signal strength and/or location information of the WLAN AP 160a may be captured via the LBS client software as RF environment information for the device RF environment database 214. The status may be captured continuously, aperiodically, or periodically.

The Bluetooth radio 206 may comprise suitable logic circuitry, interfaces and/or code that may be operable to transmit and receive Bluetooth radio frequency signals. The Bluetooth radio 206 may be operable to receive Bluetooth radio frequency signals from the Bluetooth network 150. In this regard, the status of the received Bluetooth RF signals such as the received Bluetooth RF signal strength may be captured via the LBS client software as RF environment information for the device RF environment database 214. The status may be captured continuously, aperiodically, or periodically.

The cellular radio 208 may comprise suitable logic, devices, interfaces and/or code that may be operable to transmit and receive wireless cellular radio frequency signals such as 2G/2.5G/3G/4G RF signals. The cellular radio 208 may be operable to receive wireless cellular RF signals from, for example, the BS 170a in the cellular network 170. In this regard, a status of the received cellular RF signals such as the received cellular RF signal strength and/or location information of the BS 170a may be captured via the LBS client software as RF environment information for the device RF environment database 214. The status may provide an indication of whether the traffic is heavy or light. The status may be captured continuously, aperiodically, or periodically. The captured location information of the BS 170a may comprise location related parameters such as, for example, a Cell ID, a Radio Network Controller (RNC) ID, and/or a base station ID.

The WiMAX radio 210 may comprise suitable logic, devices, interfaces and/or code that may be operable to transmit and receive wireless WiMAX radio frequency signals. The WiMAX radio 210 may be operable to receive WiMAX RF signals from, for example, the BS 180a in the WiMAX network 180. In this regard, the status of the received WiMAX RF signals such as the received WiMAX RF signal strength and/or location information of the BS 180a may be captured via the LBS client software as RF environment information for the device RF environment database 214. The status may provide an indication of whether the traffic is heavy or light. The status may be captured continuously, aperiodically, or periodically. The captured location information of the BS 180a may comprise location related parameters such as, for example, a base station ID.

The FM radio 212 may comprise suitable logic circuitry, interfaces and/or code that may be operable to receive FM radio frequency signals from, for example, the broadcast station 190a in the broadcast network 190. The received FM RF signals may comprise RDS data over FM bands. In this regard, the received FM RF signal strength and/or location information of the broadcast station 190a may be captured via the LBS client software as RF environment information for the device RF environment database 214.

The device RF environment database 214 may comprise suitable logic, circuitry, and/or code that may be operable to store RF environment data captured via the RF experiences of the LBS client device 200. The stored environment data are stamped in time and location. The device RF environment database 214 may be operable to provide corresponding RF environment data for generating device RF environment reports to be provided to the LBS server 120. The device RF environment database 214 may be operable to manage and update the stored RF environment data.

The memory 216 may comprise suitable logic, circuitry, and/or code that may be operable to store information such as executable instructions and data that may be utilized by the processor 201 and/or other associated component units such as, for example, the GNSS radio 201. The memory 216 may comprise RAM, ROM, low latency nonvolatile memory such as flash memory and/or other suitable electronic data storage.

In operation, the processor 201 may be operable to manage and/or control operations of associated component units such as, for example, the GNSS radio 202, the WLAN radio 204, and the cellular radio 208 depending on corresponding usages. One or more associated radios such as, for example, the GNSS radio 204 and/or the cellular radio 208 may be activated or deactivated whenever it may be necessary to do so. The processor 201 may be operable to use the LBS client software 201 a to capture RF environment data through its RF experiences. The captured RF environment may be used for dynamically capturing wireless nodes such as the BS 170a. The processor 201 may be operable to stamp, in time and location, the captured RF environment information to store into the device RF environment database 214. A device RF environment report may be generated using data in the device RF environment database 214 whenever it may be necessary to do so. The processor 201 may be operable to send the generated device RF environment report to the LBS server 120 and in return receive a designated device capture profile. The designated device capture profile may comprise instruction for desired RF environment data or information from the LBS server 120. The processor 201 may be operable to capture desired RF environment data via the LBS client software 201 a according to the designated device capture profile. The captured desired RF environment information may be stamped, in time and location, to be stored into the device RF environment database 214. A new device RF environment report may be generated using the captured desired RF environment information and report to the LBS server 120 to optimize LBS performance.

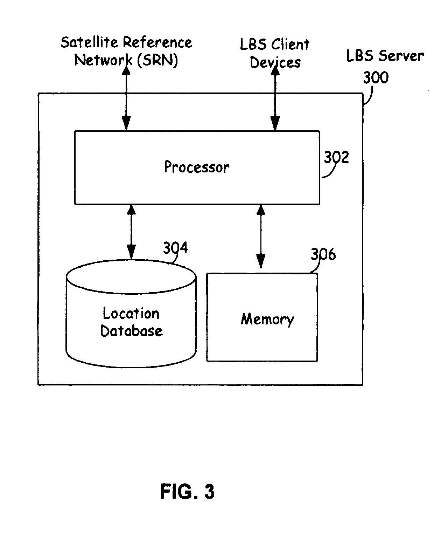

FIG. 3 is a block diagram illustrating an exemplary LBS server that is operable to dynamically capture wireless nodes using device RF environment reports from LBS client devices, in accordance with an embodiment of the invention. Referring to FIG. 3, there is shown a LBS server 300. The LBS server 300 may comprise a processor 302, a client location database 304 and a memory 306.

The processor 302 may comprise suitable logic, circuitry, interfaces and/or code that may be operable to manage and/or control operations of the client location database 304 and the memory 306. The processor 302 may be operable to receive a plurality of device RF environment reports from associated LBS client devices such as the LBS client device 110a. The received device RF environment reports may comprise RF environment information indicating wireless nodes that the corresponding LBS client device encountered or detected. The processor 302 may be operable to communicate with the assistant-GNSS server 122 to compare the received device RF environment report with a corresponding portion of the reference database 122a near the detected wireless nodes. The processor 302 may be operable to generate a device capture profile for each received device RF environment report based on the corresponding reported RF environment information and the status of the reference database 122a. In instances where the reported RF environment information may indicate that, for example, the LBS client device 110a has plenty of power and/or memory, and is in an area where the reference database 122a is not well populated, the processor 302 may be operable to generate a capture profile with instructions for the LBS client device 110a to aggressively capture or map device RF environment data for the area. In contrast, in instances where the reported RF environment information may indicate that the LBS client device 110a is low on battery and/or memory, and may be in an area where the reference database 122a may already have plenty of current data, accordingly, the processor 302 may be operable to generate a capture profile to instruct the LBS client device 110a to capture or map device RF environment data in a reduced manner. The generated capture profile may comprise information such as a duration to continue sampling for each associated radio and the timing that the LBS client device 110a should upload a device RF environment report to the LBS server 300. The processor 302 may be operable to send the generated capture profile designated to the LBS client device 110a and receive a new device RF environment report comprising desired RF environment data from the LBS client device 110a. The processor 302 may be operable to dynamically capture wireless nodes from the received new RF environment reports. The processor 302 may be operable to communicate captured wireless nodes with the assistant GNSS server 122 over time such that the captured wireless nodes may be accurately located. The processor 302 may be operable to use the accurately located wireless nodes in locating corresponding mobile wireless devices such as the LBS client device 110a for LBS services.

The location database 304 may comprise suitable logic, circuitry, and/or code that may be operable to store location information of associated communication devices such as wireless nodes and LBS client devices. The stored location information may be provided to associated communication devices when need to support LBS service. The location database 304 may be operable to manage and update the stored location data.

The memory 306 may comprise suitable logic, circuitry, and/or code that may be operable to store information such as executable instructions and data that may be utilized by the processor 302 and/or other associated component units such as, for example, the location database 304. The memory 306 may comprise RAM, ROM, low latency nonvolatile memory such as flash memory and/or other suitable electronic data storage.

In an exemplary embodiment of the invention, the processor 302 may receive a device RF environment report from an associated LBS client device such as the LBS client device 110a. One or more wireless nodes may be captured from the received device RF environment report. The processor 302 may be operable to compare the received device RF environment report with reference database near the captured wireless nodes. A device capture profile may be generated for the received device RF environment report based on the reported RF environment information and the status of the reference database 122a. The generated capture profile comprises instructions for specific RF environment information that the LBS client device 110a is expected to capture. The generated capture profile may be sent to the LBS client device 110a. In response, the processor 302 may be operable to receive a new device RF environment report comprising desired RF environment data from the LBS client device 110a. The processor 302 may be operable to communicate with the assistant GNSS server 122 to accurately locate wireless nodes captured in the received new RF environment reports. The processor 302 may be operable to store the accurately located wireless nodes in the location database 304 for locating corresponding mobile wireless devices such as the LBS client device 110a for LBS services.

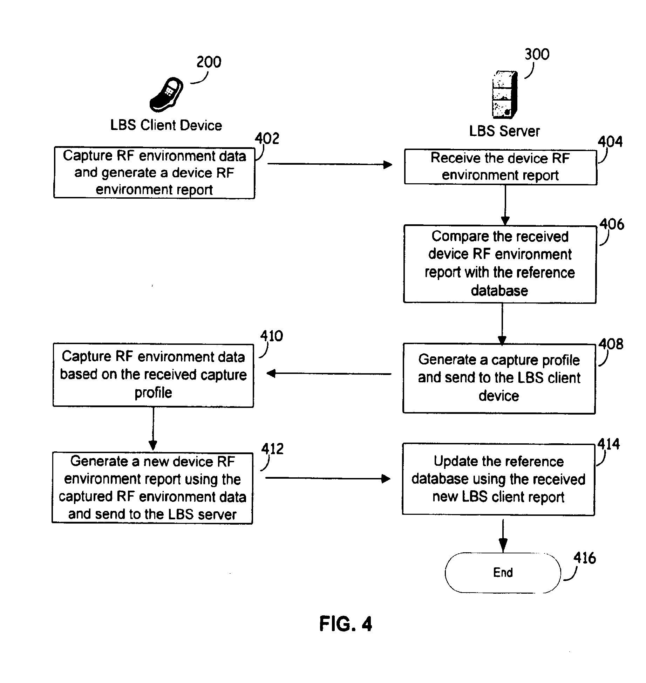

FIG. 4 is a flow chart illustrating an exemplary procedure for a dynamic wireless node capture for a LBS server, client and reference database, in accordance with an embodiment of the invention. Referring to FIG. 4, the exemplary steps may start with step 402. In step 402, the LBS client device 200 may be operable to use the LBS client software 201 to capture RF environment data through its RF experiences. The captured RF environment data may be time and location stamped via the LBS client software 201. The LBS client device 200 may be operable to utilize the time and location stamped RF environment data to generate a device RF environment report. The LBS client device 200 may be operable to send the generated device RF environment report to the LBS server 300. In step 404, the LBS server 300 may be operable to receive the device RF environment report, which may comprise captured wireless nodes. In step 406, the LBS server 300 may be operable to compare the received device RF environment report with reference database near the captured wireless nodes. In step 408, the LBS server 300 may be operable to generate a capture profile designated to the LBS client device 200 based on the received device RF environment report and status of the reference database 122a. The generated capture profile may be sent to the LBS client device 200. In step 410, the LBS client device 200 may be operable to capture RF environment data according to the received capture profile. The captured RF environment data may be time and location stamped. In step 412, the LBS client device 200 may be operable to generate a new device RF environment report using the captured RF environment data and send to the LBS server 300. In step 414, the LBS server 300 may be operable to communicate with the assistant GNSS server so as to update the reference database 122a using the received new LBS client report

In various exemplary aspects of the method and system for dynamic wireless node capture for LBS server client reference database, a GNSS capable mobile device, such as the LBS client device 110a, may be operable to send a device RF environment report to the LBS server 120. The LBS client device 110a may be operable to receive a capture profile from the LBS server 120. The device RF environment report comprises various encountered RF information associated with the LBS client device 110a. For example, the encountered RF information may comprise a state of one or more radios, a state of power and/or memory resources, and/or positioning variables of the LBS client device 110a. The received capture profile comprises information that specifies a desired RF environment report that the LBS server 120 expects to receive from the LBS client device 110a. The LBS server 120 may be operable to determine the capture profile designated for the LBS client device 110a according to the RF environment report received from the LBS client device 110a and the reference database 122a of the assistant GNSS server 122. The LBS client device 110a may be operable to capture desired RF environment data according to the received capture profile. The captured desired RF environment data may be time and location stamped via the LBS client software 201 a. The LBS client device 110a may be operable to generate a new device RF environment report using the time and location stamped RF environment data. The generated new device RF environment report may be sent to the LBS server 120. The LBS server 120 may be operable to communicate with the assistant GNSS server 122 so as to update the reference database 122a according to the received new device RF environment report. The updated reference database may be utilized by the LBS server 120 to locate associated mobile devices such as the LBS client device 110a when need.

Another embodiment of the invention may provide a machine and/or computer readable storage and/or medium, having stored thereon, a machine code and/or a computer program having at least one code section executable by a machine and/or a computer, thereby causing the machine and/or computer to perform the steps as described herein for a method and system for dynamic wireless node capture for LBS server client reference database.

Accordingly, the present invention may be realized in hardware, software, or a combination of hardware and software. The present invention may be realized in a centralized fashion in at least one computer system, or in a distributed fashion where different elements are spread across several interconnected computer systems. Any kind of computer system or other apparatus adapted for carrying out the methods described herein is suited. A typical combination of hardware and software may be a general-purpose computer system with a computer program that, when being loaded and executed, controls the computer system such that it carries out the methods described herein.

The present invention may also be embedded in a computer program product, which comprises all the features enabling the implementation of the methods described herein, and which when loaded in a computer system is able to carry out these methods. Computer program in the present context means any expression, in any language, code or notation, of a set of instructions intended to cause a system having an information processing capability to perform a particular function either directly or after either or both of the following: a) conversion to another language, code or notation; b) reproduction in a different material form.

While the present invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiment disclosed, but that the present invention will include all embodiments falling within the scope of the appended claims.

## Claims

1. A method for communication, the method comprising:
performing by one or more processors and/or circuits in a Global Navigation Satellite Systems (GNSS) capable mobile device (110, 200):
sending a device radio frequency (RF) environment report to a location server (120, 300), said device RF environment report comprising state of power and/or memory resource and positioning variables of said GNSS capable mobile device;
receiving a capture profile from said location server, wherein said location server determines said capture profile for GNSS capable mobile device based on said device RF environment report and a reference database, said capture profile including instructions on capturing RF environment data for an area in which the GNSS capable device is located, said instructions based upon said state of power and/or memory resource and a state of population of said reference database in said area in which said GNSS capable device is located; and
generating a new device RF environment report, to build and/or refine the reference database, according to said received capture profile.

2. The method according to claim 1, comprising capturing RF environment data according to said received capture profile, said captured RF environment data comprising captured wireless nodes detected by said GNSS capable mobile device.

3. The method according to claim 2, comprising time and location stamping said captured RF environment data.

4. The method according to claim 3, comprising generating said new device RF environment report using said time and location stamped RF environment data.

5. The method according to claim 4, comprising sending said generated new device RF environment report to said location server.

6. The method according to claim 5, wherein said reference database is updated according to said received new device RF environment report such that said captured wireless nodes are accurately located for use as reference nodes in locating said GNSS capable mobile device or other mobile devices.

7. The method according to claim 5, wherein said instructions comprise a sampling rate for said capturing RF environment data, a duration of said sampling rate and a time for sending said generated new device RF environment report.

8. A system for communication, the system comprising:
one or more processors and/or circuits in a Global Navigation Satellite Systems (GNSS) capable mobile device (110, 200), wherein said one or more processors and/or circuits are operable to:
send a device radio frequency (RF) environment report to a location server (120, 300), said device RF environment report comprising state of power and/or memory resource and positioning variables of said GNSS capable mobile device;
receive a capture profile from said location server, wherein said location server is configured to determine said capture profile for GNSS capable mobile device based on said device RF environment report and a reference database, said capture profile including instructions on capturing RF environment data for an area in which the GNSS capable device is located, said instructions based upon said state of power and/or memory resource and a state of population of said reference database in said area in which said GNSS capable device is located; and
generate a new device RF environment report, to build and/or refine the reference database, according to said received capture profile.

9. The system according to claim 8, wherein said one or more processors and/or circuits are operable to capture RF environment data according to said received capture profile, said captured RF environment data comprising captured wireless nodes detected by said GNSS capable mobile device.

10. The system according to claim 9, wherein said one or more processors and/or circuits are operable to time and location stamp said captured RF environment data.

11. The system according to claim 10, wherein said one or more processors and/or circuits are operable to generate said new device RF environment report using said time and location stamped RF environment data.

12. The system according to claim 11, wherein said one or more processors and/or circuits are operable to send said generated new device RF environment report to said location server.

13. The system according to claim 12, wherein said location server is configured to update said reference database according to said received new device RF environment report such that said captured wireless nodes are accurately located for use as reference nodes in locating said GNSS capable mobile device or other mobile devices.

14. The system according to claim 12, wherein said instructions comprise a sampling rate to capture RF environment data, a duration of said sampling rate and a time to send said generated new device RF environment report.

## Patentansprüche

1. Verfahren zur Kommunikation, wobei das Verfahren umfasst:
Durchführen, von einem oder mehreren Prozessoren und/oder Schaltungen, in einem GNSS-fähigen (Global Navigation Satellite System; globales Navigationssatellitensystem) mobilen Gerät (110, 200):
Senden eines Gerät-Hochfrequenz (HF)-Umgebungsberichts an einen Standortserver (120, 300), wobei der Gerät-HF-Umgebungsbericht Leistungszustand und/oder Speicherressource und Positionsvariablen des GNSS-fähigen mobilen Geräts aufweist;
Empfangen eines Erfassungsprofils von dem Standortserver, wobei der Standortserver das Erfassungsprofil für das GNSS-fähige mobile Gerät basierend auf dem Gerät-HF-Umgebungsbericht und einer Referenzdatenbank bestimmt, wobei das Erfassungsprofil Befehle über das Erfassen von HF-Umgebungsdaten für einen Bereich enthält, in dem sich das GNSS-fähige Gerät befindet, wobei die Befehle auf dem Leistungszustand und/oder der Speicherressource und dem Populationszustand der Referenzdatenbank in dem Bereich, in dem sich das GNSS-fähige Gerät befindet, basieren; und
Erzeugen eines neuen Gerät-HF-Umgebungsberichts, um die Referenzdatenbank aufzubauen und/oder zu verfeinern, gemäß dem empfangenen Erfassungsprofil.

2. Verfahren nach Anspruch 1, das das Erfassen von HF-Umgebungsdaten gemäß dem empfangenen Erfassungsprofil umfasst, wobei die erfassten HF-Umgebungsdaten erfasste Drahtlosknoten aufweisen, die von dem GNSS-fähigen mobilen Gerät ermittelt wurden.

3. Verfahren nach Anspruch 2, das das zeitliche und örtliche Markieren der erfassten HF-Umgebungsdaten umfasst.

4. Verfahren nach Anspruch 3, das das Erzeugen des neuen Gerät-HF-Umgebungsberichts unter Verwendung der zeitlich und örtlich markierten HF-Umgebungsdaten umfasst.

5. Verfahren nach Anspruch 4, das das Senden des erzeugten neuen Gerät-HF-Umgebungsberichts an den Standortserver umfasst.

6. Verfahren nach Anspruch 5, wobei die Referenzdatenbank gemäß dem empfangenen neuen Gerät-HF-Umgebungsbericht aktualisiert wird, so dass die erfassten Drahtlosknoten zur Verwendung als Referenzknoten beim Lokalisieren des GNSS-fähigen mobilen Geräts oder anderer mobiler Geräte akkurat lokalisiert werden.

7. Verfahren nach Anspruch 5, wobei die Befehle eine Abtastrate zum Erfassen der HF-Umgebungsdaten, eine Dauer der Abtastrate und eine Zeit zum Senden des erzeugten neuen Gerät-HF-Umgebungsberichts aufweisen.

8. System zur Kommunikation, wobei das System aufweist:
einen oder mehrere Prozessoren und/oder Schaltungen in einem GNSS-fähigen (Global Navigation Satellite System; globales Navigationssatellitensystem) mobilen Gerät (110, 200), wobei der eine oder die mehreren Prozessoren und/oder Schaltungen betreibbar sind zum:
Senden eines Gerät-Hochfrequenz (HF)-Umgebungsberichts an einen Standortserver (120, 300), wobei der Gerät-HF-Umgebungsbericht Leistungszustand und/oder Speicherressource und Positionsvariablen des GNSS-fähigen mobilen Geräts aufweist;
Empfangen eines Erfassungsprofils von dem Standortserver, wobei der Standortserver dazu konfiguriert ist, das Erfassungsprofil für das GNSS-fähige mobile Gerät basierend auf dem Gerät-HF-Umgebungsbericht und einer Referenzdatenbank zu bestimmen, wobei das Erfassungsprofil Befehle über das Erfassen von HF-Umgebungsdaten für einen Bereich enthält, in dem sich das GNSS-fähige Gerät befindet, wobei die Befehle auf dem Leistungszustand und/oder der Speicherressource und dem Populationszustand der Referenzdatenbank in dem Bereich, in dem sich das GNSS-fähige Gerät befindet, basieren; und
Erzeugen eines neuen Gerät-HF-Umgebungsberichts, um die Referenzdatenbank aufzubauen und/oder zu verfeinern, gemäß dem empfangenen Erfassungsprofil.

9. System nach Anspruch 8, wobei der eine oder die mehreren Prozessoren und/oder Schaltungen betreibbar sind zum Erfassen von HF-Umgebungsdaten gemäß dem empfangenen Erfassungsprofil, wobei die erfassten HF-Umgebungsdaten erfasste Drahtlosknoten aufweisen, die von dem GNSS-fähigen mobilen Gerät ermittelt wurden.

10. System nach Anspruch 9, wobei der eine oder die mehreren Prozessoren und/oder Schaltungen betreibbar sind zum zeitlichen und örtlichen Markieren der erfassten HF-Umgebungsdaten.

11. System nach Anspruch 10, wobei der eine oder die mehreren Prozessoren und/oder Schaltungen betreibbar sind zum Erzeugen des neuen Gerät-HF-Umgebungsberichts unter Verwendung der zeitlich und örtlich markierten HF-Umgebungsdaten.

12. System nach Anspruch 11, wobei der eine oder die mehreren Prozessoren und/oder Schaltungen betreibbar sind zum Senden des erzeugten neuen Gerät-HF-Umgebungsberichts an den Standortserver.

13. System nach Anspruch 12, wobei der Standortserver dazu konfiguriert ist, die Referenzdatenbank gemäß dem empfangenen neuen Gerät-HF-Umgebungsbericht zu aktualisieren, so dass die erfassten Drahtlosknoten zur Verwendung als Referenzknoten beim Lokalisieren des GNSS-fähigen mobilen Geräts oder anderer mobiler Geräte akkurat lokalisiert werden.

14. System nach Anspruch 12, wobei die Befehle eine Abtastrate zum Erfassen der HF-Umgebungsdaten, eine Dauer der Abtastrate und eine Zeit zum Senden des erzeugten neuen Gerät-HF-Umgebungsberichts aufweisen.

## Revendications

1. Procédé de communication, le procédé comprenant :
l'exécution par un ou plusieurs processeur(s) et/ou circuit(s) dans un dispositif mobile (110, 200) compatible systèmes mondiaux de navigation par satellite (GNSS) :
de l'envoi d'un rapport d'environnement de fréquences radio (RF) de dispositif à un serveur (120, 300) de localisation, ledit rapport d'environnement RF de dispositif comprenant des variables d'état de ressources d'énergie et/ou de mémoire et de positionnement dudit dispositif mobile compatible GNSS ;
de la réception d'un profil de capture dudit serveur de localisation, dans lequel ledit serveur de localisation détermine ledit profil de capture pour dispositif mobile compatible GNSS sur la base dudit rapport d'environnement RF de dispositif et d'une base de données de référence, ledit profil de capture incluant des instructions sur la capture de données d'environnement RF pour une zone dans laquelle le dispositif compatible GNSS est localisé, lesdites instructions basées sur ledit état de ressources d'énergie et/ou de mémoire et un état de population de ladite base de données de référence dans ladite zone dans laquelle ledit dispositif compatible GNSS est localisé ; et
de la génération d'un nouveau rapport d'environnement RF de dispositif pour construire et/ou affiner la base de données de référence en fonction dudit profil de capture reçu.

2. Procédé selon la revendication 1, comprenant la capture de données d'environnement RF en fonction dudit profil de capture reçu, lesdites données d'environnement RF capturées comprenant des noeuds sans fil capturés détectés par ledit dispositif mobile compatible GNSS.

3. Procédé selon la revendication 2, comprenant le marquage en temps et en localisation desdites données d'environnement RF capturées.

4. Procédé selon la revendication 3, comprenant la génération dudit nouveau rapport d'environnement RF de dispositif en utilisant lesdites données d'environnement RF marquées en temps et en localisation.

5. Procédé selon la revendication 4, comprenant l'envoi dudit nouveau rapport d'environnement RF de dispositif généré audit serveur de localisation.

6. Procédé selon la revendication 5, dans lequel ladite base de données de référence est mise à jour en fonction dudit nouveau rapport d'environnement RF de dispositif reçu, de telle sorte que lesdits noeuds sans fil capturés sont précisément localisés pour une utilisation comme noeuds de référence dans la localisation dudit dispositif mobile compatible GNSS ou d'autres dispositifs mobiles.

7. Procédé selon la revendication 5, dans lequel lesdites instructions comprennent une fréquence d'échantillonnage pour ladite capture de données d'environnement RF, une durée de ladite fréquence d'échantillonnage et un temps pour envoyer ledit nouveau rapport d'environnement RF de dispositif généré.

8. Système de communication, le système comprenant :
un ou plusieurs processeur(s) et/ou circuit(s) dans un dispositif mobile (110, 200) compatible systèmes mondiaux de navigation par satellite (GNSS), dans lequel ledit un ou lesdits plusieurs processeur(s) et/ou circuit(s) est/sont utilisable(s) pour :
envoyer un rapport d'environnement de fréquences radio (RF) de dispositif à un serveur (120, 300) de localisation, ledit rapport d'environnement RF de dispositif comprenant des variables d'état de ressources d'énergie et/ou de mémoire et de positionnement dudit dispositif mobile compatible GNSS ;
recevoir un profil de capture dudit serveur de localisation, dans lequel ledit serveur de localisation est configuré pour déterminer ledit profil de capture pour dispositif mobile compatible GNSS sur la base dudit rapport d'environnement RF de dispositif et d'une base de données de référence, ledit profil de capture incluant des instructions sur la capture de données d'environnement RF pour une zone dans laquelle le dispositif compatible GNSS est localisé, lesdites instructions basées sur ledit état de ressources d'énergie et/ou de mémoire et un état de population de ladite base de données de référence dans ladite zone dans laquelle ledit dispositif compatible GNSS est localisé ; et
générer un nouveau rapport d'environnement RF de dispositif pour construire et/ou affiner la base de données de référence en fonction dudit profil de capture reçu.

9. Système selon la revendication 8, dans lequel ledit un ou lesdits plusieurs processeur(s) et/ou circuit(s) est/sont utilisable(s) pour capturer des données d'environnement RF en fonction dudit profil de capture reçu, lesdites données d'environnement RF capturées comprenant des noeuds sans fil capturés détectés par ledit dispositif mobile compatible GNSS.

10. Système selon la revendication 9, dans lequel ledit un ou lesdits plusieurs processeur(s) et/ou circuit(s) est/sont utilisable(s) pour marquer en temps et en localisation lesdites données d'environnement RF capturées.

11. Système selon la revendication 10, dans lequel ledit un ou lesdits plusieurs processeur(s) et/ou circuit(s) est/sont utilisable(s) pour générer ledit nouveau rapport d'environnement RF de dispositif en utilisant lesdites données d'environnement RF marquées en temps et en localisation.

12. Système selon la revendication 11, dans lequel ledit un ou lesdits plusieurs processeur(s) et/ou circuit(s) est/sont utilisable(s) pour envoyer ledit nouveau rapport d'environnement RF de dispositif généré audit serveur de localisation.

13. Système selon la revendication 12, dans lequel ledit serveur de localisation est configuré pour mettre à jour ladite base de données de référence en fonction dudit nouveau rapport d'environnement RF de dispositif reçu, de telle sorte que lesdits noeuds sans fil capturés sont précisément localisés pour une utilisation comme noeuds de référence dans la localisation dudit dispositif mobile compatible GNSS ou d'autres dispositifs mobiles.

14. Système selon la revendication 12, dans lequel lesdites instructions comprennent une fréquence d'échantillonnage pour capturer des données d'environnement RF, une durée de ladite fréquence d'échantillonnage et un temps pour envoyer ledit nouveau rapport d'environnement RF de dispositif généré.
